# EUROPÄISCHE PATENTANMELDUNG

(11) **EP 4 245 668 A1**
(43) Veröffentlichungstag der Anmeldung: **20.09.2023**
(21) Anmeldenummer: 23159666.9
(22) Anmeldetag: 02.03.2023
(51) Int. Cl.: B64G 1/00, B64G 1/22, B64C 7/00, F42B 15/00, B64C 1/14, B64G 1/12, B65D 55/00

(54) **LUKE FÜR EIN RAKETENSEGMENT, RAHMEN FÜR EINE RAKETENSEGMENTÖFFNUNG ZUM VERBINDEN MIT EINER LUKE, RAKETENSEGMENT UND VERFAHREN ZUR BENUTZUNG EINES RAKETENSEGMENTS**

(30) Priorität: 16.03.2022 DE 102022106158
(71) Anmelder: Deutsches Zentrum für Luft- und Raumfahrt e.V., 53227 Bonn (DE)
(72) Erfinder: Keßler, Raphael, 53757 Sankt Augustin (DE); Voigtmann, Thomas, 84079 Bruckberg (DE)
(74) Vertreter: dompatent von Kreisler Selting Werner - Partnerschaft von Patent- und Rechtsanwälten mbB

(57) **Zusammenfassung**

Eine Luke (10) für ein Raketensegment (500), mit einem Grundkörper (12), einer mit dem Grundkörper (12) verbundenen Blende (14) zum Verschließen einer Raketensegmentöffnung (502), und einer Radialdichtung (30) zum druckdichten Abdichten zwischen Grundkörper (12) und Raketensegmentöffnung (502). Ferner ein Rahmen (100), ein Raketensegment (500) und ein Verfahren zur Benutzung eines Raketensegments (500).

## Beschreibung

Die Erfindung betrifft eine Luke für ein Raketensegment, einen Rahmen für eine Raketensegmentöffnung zum Verbinden mit einer Luke, ein Raketensegment und ein Verfahren zur Benutzung eines Raketensegments.

Höhenforschungsraketen stellen Plattformen dar, die Nutzlasten im Sinne von wissenschaftlichen Experimenten einen Zugang zur Mikrogravitationsumgebung verschaffen. Die äußeren strukturellen Systemgrenzen der Nutzlast sind durch die Rumpfsegmente gekennzeichnet. So lässt sich individuell - unter Einhaltung strömungstechnischer (keine herausragenden Teile) und mechanischer Aspekte (Massenschwerpunkt, Festigkeit, Steifigkeit, etc.) - die innere und äußere Geometrie jedes Experiments frei gestalten. Die Geometrie und die Grenzen der Gestaltung (insbesondere die Höhe und Toleranzen) solcher Rumpfsegmente sind weitestgehend festgelegt und standardisiert.

Da während der Aufstiegsphase der Rakete der umgebende atmosphärische Druck abnimmt, müssen die Rumpfsegmente entweder druckdicht sein oder der Innendruck durch geeignete Entlüftungsbohrung kontrolliert abgelassen werden. Zweiteres bedingt eine vakuumtaugliche Gestaltung des Experiments. Bei druckdichten Experimenten verursachen Leckagen in Mikrogravitation Beschleunigungen, was zu einer Minderung der Mikrogravitationsqualität führt. Experimente mit sensiblen Untersuchungsgegenständen, wie beispielsweise lebenden biologischen Zellen, aber auch viele Optiken bedürfen fortlaufend atmosphärischen Druck und eine möglichst kurze Zeitspanne zwischen der Präparation im Labor und dem Flug. In Fällen, bei denen die Proben nicht langzeitstabil sind, wird ein Zugang zur Raketennutzlast während des Countdowns ermöglicht, der sog. "Late-Access". Während dieser Phase ist die Rakete voll integriert, d.h. der Zugang zu Experimenten oder anderer Nutzlast ist nur noch durch Luken möglich. Bedarf ein Experiment sowohl eines Late-Access als auch atmosphärischen Drucks, muss nach aktuellem Stand der Technik der einzugebende, insbesondere einzuschiebende, Teil von einer Druckkammer umgeben sein, da die Luken nicht druckdicht sind. Die Druckkammer kann entweder so ausgelegt werden, dass sie mobil ist und mit den Proben integriert wird, oder bereits in der Nutzlaststruktur eingebunden ist und nach dem Einbau der Proben druckdicht verschlossen wird.

Dem Einbau einer Luke geht naturgemäß eine Öffnung, insbesondere ein Durchbruch, durch die Struktur voraus. Häufig wird ein Durchbruch mittels Ausfräsung erzeugt. Ein solcher Durchbruch stellt eine erhebliche Festigkeitsminderung da. Deshalb wird um die Ausfräsung im Rumpf ein Rahmen eingebaut, der die Spannungen ableitet und der Luke eine Montagefläche bieten soll. Der Rahmen kann von innen in den Rumpf genietet oder geschraubt werden. Auch eine Fertigung in Integralbauweise ist möglich, d. h. Rahmen und Rumpf werden aus einem Halbzeug hergestellt und sind stoffschlüssig verbunden. Die Luke selbst besteht aus einem gebogenen Blech, dessen Wandstärke und äußerer Krümmungsradius dem des Rumpfes entsprechen. Das Blech mit Senkbohrungen wird zum Verschließen auf den von innen montierten und entsprechend mit Gewindebohrungen versehenen Rahmen verschraubt, so dass neben einem kleinen Spalt zwischen Luke und Rumpf die ursprüngliche zylindrische Geometrie nicht beeinträchtigt wird.

Rumpfsegmente mit Luken des Stands der Technik weisen zahlreiche Nachteile auf.

Wie bereits beschrieben ist die Größe eines Durchbruchs in der Struktur und damit auch die Größe der Luke begrenzt. Einzugebende Objekte, die druckempfindlich sind, insbesondere Atomsphärendruck benötigen, wie bspw. Experimente oder Proben, müssen generell in einer Druckkammer angeordnet werden. Diese Druckkammer wird sodann durch die Rumpfsegmentöffnung eingeführt, insbesondere eingeschoben. Für die Druckkammer sind die Innenmaße des Rahmens und/oder die Innenmaße der Rumpfsegmentöffnung damit ebenfalls die limitierende Baugröße.

Bspw. beim Höhenforschungsexperiment RAMSES im Rahmen der DLR-Höhenforschungsrakete MAPHEUS-10 wurde ein Rumpfsegment mit folgenden Maßen genutzt:
Innendurchmesser Rumpfsegment: d = 430mm,
Höhe des Rumpfsegments h = 400 mm,
Bauraum des Rumpfsegments V = 62,4 dm³.

In dieses Rumpfsegment wurden durch zwei gegenüberliegende Luken zwei Druckkammern eingeschoben, die insbesondere aufgrund der Innenmaße des Rahmens und/oder der Innenmaße der Rumpfsegmentöffnung, auf einen Bauraum von je 7,6 dm³, also insgesamt 15,2 dm³ begrenzt waren.

Somit können also lediglich 24 % des prinzipiell zur Verfügung stehenden Bauraums genutzt werden. Ein Nachteil besteht somit darin, dass keine komplette Ausnutzung des zur Verfügung stehenden Bauraums möglich ist.

Optische Diagnostiken, wie beispielsweise Laser oder Mikroskope, bestehen oftmals aus nicht trennbaren Baugruppen. Das kann wegen einer sehr präzisen Ausrichtung der Komponenten untereinander erklärt werden als auch an sehr kleinen Arbeitsabständen zwischen Objektiv und Probe. Dem Einbau dieser Diagnostiken in einem nicht Druck beaufschlagten Teil der Rumpfsektion in Kombination mit einer druckdichten Probe wird dadurch Grenzen gesetzt. Qualitativ hochwertige Strahlengänge können nicht durch sehr dünne und zugleich transparente Teile eines Druckbehälters ohne Qualitätsverlust transmittiert werden. Solche Experimente auf Höhenforschungsraketen können nach dem aktuellen Stand der Technik nur langzeitstabile Proben untersuchen oder müssen vakuumtauglich ausgelegt werden. Die Vakuumtauglichkeit solcher Systeme kann sehr aufwendig werden:
- Objektive müssen dafür mit Entlüftungsbohrungen versehen werden, damit die Abstände ihrer Linsen untereinander nicht variieren; und/oder
- alle Komponenten müssen aus Materialien gefertigt sein, die im Vakuum nicht ausgasen; und/oder
- bei der Mitnahme von Flüssigkeiten müssen besondere Vorkehrungen getroffen werden, um ein Kochen zu verhindern (Druckkreisläufe); und/oder
- elektrische Verbraucher müssen auf ihren Thermalhaushalt hin überprüft werden, da sie ihre Wärme nicht mehr über Konvektion abführen können. Allgemein ist bei Experimenten im Vakuum der Thermalhaushalt besonders zu beachten. Die Wärmeabfuhr erfolgt dann bei Bedarf mit zusätzlichen Vorkehrungen.

Ferner müssen generell alle Subsysteme während der Entwicklung zusätzlich im Vakuum getestet werden, wodurch ein erheblicher Mehraufwand entsteht.

Ein weiterer Nachteil ergibt sich durch den, insbesondere zeitintensive und/oder fehleranfälligen, Verschlussvorgang der Luke aus dem Stand der Technik.

Eine Luke in einer Raketennutzlast ist ein sicherheitsrelevantes Bauteil. Der Verlust einer Luke während eines Fluges kann zum Totalverlust der Rakete führen, vgl. Stefan Volk, Mikael Viertotak, Stefan Kramer, Simon Mawn, Katharina Schuttauf, REXUS 24 FAILURE INVESTIGATION, January 2019, Conference: 24th ESA Symposium on European Rocket & Balloon programmes and related research.

Die Luken werden nach dem heutigen Stand der Technik mit Senkkopfschrauben an den Rahmen gefügt. Bei dem oben aufgeführten Beispiel werden 17 Schrauben je Luke verwendet. Bei einem Late-Access müssen also 34 Schrauben mit dem Kreuzanzugsverfahren montiert und nachgezogen werden. Dafür wird ein gewisser Zeitaufwand in Anspruch genommen.

Ein Late-Access ist ein Zugang zur Raketennutzlast während eines Count Downs. In einem Countdown werden alle relevanten Systeme des Vehikels getestet und für den Flug vorbereitet. Dies erfolgt im Rahmen eines terminierten Ablaufes, dem "Launch-Procedure". Abweichungen von der Timeline können durch Anhalten des Count Down- einem "Hold" - an entsprechender Stelle kompensiert werden. Zu lange Holds oder Holds in einer kritischen Phase des Countdowns können bedingt durch technische Anlagengrenzen zu einem Abbruch führen. Da die Rakete zu diesem Zeitpunkt vollständig integriert ist, müssen besondere Sicherheitsvorkehrungen getroffen werden. Beispielsweise dürfen keine elektrischen Schaltkreise geschaltet werden, während Personen an der Rakete arbeiten, Der Zugang und die Anzahl der Personen ist streng reglementiert und zeitlich aufeinander abgestimmt. Verzögerungen beim Integrieren der Proben in die Nutzlast können sich daher kritisch auf weitere Prozesse auswirken. Um einen Late-Access sicher und schnell durchzuführen, ist ein Design zur Integration der Proben anzustreben, das möglichst wenig Handgriffe benötigt und wenig Fehlerquellen bietet. Fällt bspw. eine Schraube in das Experimentmodul, muss diese zwingend entfernt werden. Dies kann den gesamten Ausbau der Nutzlast bedeuten. Ebenso beispielhaft sind vergessenes Werkzeug in der Nutzlast und Beschädigungen der Finnen durch herabfallende Teile.

Eine Luke aus dem Stand der Technik ist bspw. beschrieben in: Stefan Volk, Mikael Viertotak, Stefan Kramer, Simon Mawn, Katharina Schuttauf, REXUS 24 FAILURE INVESTIGATION, January 2019, Conference: 24th ESA Symposium on European Rocket & Balloon programmes and related research.

Aufgabe der Erfindung ist es, eine Luke für ein Raketensegment, einen Rahmen für eine Raketensegmentöffnung zum Verbinden mit einer Luke, ein Raketensegment und ein Verfahren zur Benutzung eines Raketensegments zu schaffen, wobei das Verschließen der Raketensegmentöffnung optimiert ist.

Die Lösung der Aufgaben erfolgt erfindungsgemäß durch eine Luke für ein Raketensegment gemäß Anspruch 1, einen Rahmen für eine Raketensegmentöffnung zum Verbinden mit einer Luke gemäß Anspruch 7, ein Raketensegment gemäß Anspruch 12 und ein Verfahren zur Benutzung eines Raketensegments gemäß Anspruch 13.

Bei der erfindungsgemäßen Luke für ein Raketensegment handelt es sich insbesondere um eine Luke für ein Raketensegment einer Höhenforschungsrakete. Vorzugsweise handelt es sich um eine Luke für ein zylinderförmiges, bevorzugt kreiszylinderförmiges, Raketensegment. Die Luke weist eine Grundkörper auf. Ferner weist die Luke eine mit dem Grundkörper verbundenen Blende zum Verschließen einer Öffnung des Raketensegments, einer Raketensegmentöffnung, auf. Die Blende ist insbesondere gebogen. Es ist bevorzugt, dass die Blende ein gebogenes Blech aufweist, insbesondere daraus besteht. Vorzugsweise weist die Blende die Kontur und/oder die Wandstärke und/oder den äußeren Krümmungsradius des Raketensegments auf. Bevorzugt ist es, dass die Dicke der Blende der Tiefe einer Vertiefung, insbesondere Tasche, des Raketensegments zur Aufnahme der Blende der Luke entspricht. Bei der Öffnung des Raketensegments handelt es sich insbesondere um eine Late-Access-Öffnung. Die Öffnung ist insbesondere ein Durchbruch, vorzugsweise eine Ausfräsung in dem Raketensegment. Bevorzugt weist die Luke eine Radialdichtung zum druckdichten Abdichten zwischen Grundkörper und Öffnung des Raketensegments auf. Die Radialdichtung kann alternativ oder zusätzlich zum druckdichten Abdichten zwischen Luke und einem Rahmen des Raketensegments ausgeführt sein. Die Radialdichtung ist vorzugsweise zum druckdichten Verschließen der Raketensegmentöffnung ausgeführt. Insbesondere ist die Radialdichtung zu einem druckdichten Abdichten des Inneren des Raketensegments gegenüber der Umgebung, wobei vorzugsweise zwischen dem Inneren des Raketensegments und der Umgebung eine Druckdifferenz von bspw. bis zu 5 bar, bevorzugt bis zu 2 bar, besonders bevorzugt bis zu 1 bar herrscht. Insbesondere ist die Radialdichtung zu einem druckdichten Abdichten des Inneren des Raketensegments gegenüber der Umgebung, wobei im Inneren des Raketensegments Atmosphärendruck der Erdatmosphäre, bevorzug Luftdruck der Erdoberfläche, insbesondere ca. 0,3 bis 3 bar, besonders bevorzugt ca. 1 bar herrscht und/oder wobei in der Umgebung ein Druck von 0,5 bis 0 bar, bevorzugt von 0,1 bis 0 bar, besonders bevorzugt von 0,01 bis 0 bar herrscht. Der Grundkörper ist insbesondere, zumindest teilweise, zylinderförmig ausgeführt. Die Querschnittsfläche dieser Zylinderform des Grundkörpers ist insbesondere rechteckig, quadratisch, rund oder oval. Bei der rechteckigen oder quadratischen Querschnittsfläche ist es bevorzugt, dass die Ecken der Zylinderform abgerundet sind.

In bevorzugter Ausführung weist der Grundkörper eine, insbesondere umlaufende, Radialfläche auf. Die Radialfläche weist vorzugsweise eine, zumindest teilweise, insbesondere vollständig, polierte, bevorzugt elektropolierte, Oberfläche auf. Es ist bevorzugt, dass es sich um eine äußere Radialfläche handelt. Vorzugsweise entspricht die Radialfläche zumindest einem Teil der Zylindermantelfläche des Grundkörpers. Die Radialfläche ist vorzugsweise senkrecht zu zu mindestens einer Oberfläche des Grundkörpers ausgeführt.

In bevorzugter Ausführung ist die Radialdichtung mit der Radialfläche, insbesondere umlaufend, verbunden. Es ist bevorzugt, dass die Radialdichtung in einer Ebene angeordnet ist. Die Radialdichtung ist vorzugsweise parallel zu zu mindestens einer Oberfläche des Grundkörpers ausgeführt.

In bevorzugter Ausführung weist die Radialfläche eine, insbesondere umlaufende, Nut auf. Die Nut ist insbesondere zur Aufnahme der Radialdichtung ausgeführt. Es ist bevorzugt, dass die Nut in einer Ebene angeordnet ist. Die Nut ist vorzugsweise parallel zu zu mindestens einer Oberfläche des Grundkörpers ausgeführt. Es ist bevorzugt, dass die Radialdichtung in der Nut der Radialfläche aufgenommen ist. Insbesondere ist die Radialdichtung, zumindest in einem ersten Zustand der Radialdichtung, vollständig in der Nut aufgenommen. Vollständig aufgenommen meint hierbei insbesondere, dass die Radialdichtung vollständig innerhalb des Nutvolumens angeordnet ist, vorzugsweise bündig mit der Nut abschließt. Vorzugsweise entspricht die Dicke der Radialdichtung im Wesentlichen der Breite der Nut und/oder die Höhe der Radialdichtung entspricht im Wesentlichen der Tiefe der Nut.

In bevorzugter Ausführung weist der Grundkörper eine erste, mit der Blende verbundene, Fläche auf. Die erste Fläche ist insbesondere eine Blendenfläche des Grundkörpers. Die erste Fläche ist vollflächig mit der Blende verbunden. Die erste Fläche ist bspw. einstückig, auch als integral zu bezeichnen, mit der Blende verbunden. Andererseits ist bspw. auch eine stoffschlüssige und/oder kraftschlüssige und/oder formschlüssige Verbindung zwischen erster Fläche und Blende möglich. Die erste Fläche ist vorzugsweise gebogen ausgeführt. Vorzugsweise entspricht die Kontur der ersten Fläche der, insbesondere inneren, Kontur der Blende und/oder der Krümmungsradius der ersten Fläche entspricht dem, insbesondere inneren, Krümmungsradius der Blende. Der Grundkörper weist vorzugsweise ferner eine, der ersten Seite gegenüberliegende, zweite Fläche auf. Die zweite Fläche ist insbesondere eine Außenfläche des Grundkörpers. Vorzugweise ist die zweite Fläche im Wesentlichen eben, insbesondere planar. Es ist bevorzugt, dass die Radialfläche des Grundkörpers zwischen der ersten und der zweiten Fläche ausgeführt ist. Vorzugsweise ist die Radialfläche senkrecht zur zweiten Fläche ausgeführt. Die Radialdichtung und/oder die Nut ist vorzugsweise parallel zur zweiten Fläche angeordnet. Die Blende ist vorzugsweise formschlüssig und/oder kraftschlüssig und/oder stoffschlüssig mit dem Grundkörper verbunden. Bevorzugt ist es, dass die Blende mittels Senkkopfschrauben mit dem Grundkörper verbunden ist. Die Blende ist insbesondere einstückig mit dem Grundkörper ausgeführt.

Eine Luke, insbesondere die erfindungsgemäße Luke, mit der im Nachfolgenden beschriebenen Verschlussvorrichtung stellt eine unabhängige Erfindung dar. Insbesondere bedarf diese Luke nicht der Radialdichtung. Vorzugsweise weist die Luke jedoch die im Rahmen der vorliegenden Erfindung beschrieben Radialdichtung auf. Diese Luke weist vorzugsweise eines oder mehrere der Merkmale der erfindungsgemäßen Luke auf.

In bevorzugter Ausführung weist die erfindungsgemäße Luke eine Verschlussvorrichtung zur lösbaren Verbindung der Luke mit dem Raketensegment auf. Bevorzugt ist die Verschlussvorrichtung zur lösbaren Verbindung der Luke mit einem Rahmen des Raketensegments ausgeführt. Vorzugsweise weist der Grundkörper der Luke die Verschlussvorrichtung auf. Bei der Verschlussvorrichtung handelt es sich vorzugsweise um eine Verriegelung. Die Verschlussvorrichtung ist vorzugsweise zur formschlüssig lösbaren Verbindung der Luke mit dem Raketensegment ausgeführt. Insbesondere ist die Verschlussvorrichtung schraubenlos ausgeführt, weist somit keine Schraubenverbindung auf. Die Verschlussvorrichtung weist vorzugsweise zumindest eine geschlossene Position auf, bei der die Luke mit dem Raketensegment verschlossen ist. Die Verschlussvorrichtung weist vorzugsweise zumindest eine geöffnete Position auf, bei der die Luke von dem Raketensegment lösbar und/oder gelöst ist. Bei der Verschlussvorrichtung handelt es sich insbesondere um eine Schnellverschlussvorrichtung, vorzugsweise um eine Verschlussvorrichtung mit Schnellverschlussmechanik. Die Verschlussvorrichtung ist insbesondere zum schraublosen, vorzugsweise schraubenlosen Verschluss ausgeführt. Vorzugsweise weist die Verschlussvorrichtung keinerlei Schrauben zum Verschluss auf.

In bevorzugter Ausführung weist die Verschlussvorrichtung mehrere Riegel zur formschlüssigen Verbindung mit dem Raketensegment, insbesondere mit einem Rahmen des Raketensegments, auf. Vorzugsweise weist die Verschlussvorrichtung mindestens drei, bevorzugt mindestens vier, besonders bevorzugt mindestens acht Riegel auf. Bei mindestens einem der Riegel, insbesondere allen, handelt es sich insbesondere um eine Lasche. Mindestens einer der Riegel, insbesondere alle, weist/weisen insbesondere eine Fase zur Zentrierung des Riegels in einer Riegelaufnahme auf. Die Riegel sind insbesondere verschiebbar und/oder drehbar und/oder ausfahrbar ausgeführt. Es ist bevorzugt, dass die Riegel parallel zu der zweiten Fläche des Grundkörpers angeordnet und/oder bewegbar sind. Zumindest einer der Riegel, insbesondere alle, ist/sind in einer Nut, vorzugsweise einer T-Nut, geführt. Die Riegel sind vorzugsweise beweglich zum Grundkörper, bevorzugt beweglich mit dem Grundkörper, besonders bevorzugt beweglich mit der zweiten Fläche des Grundkörpers, verbunden.

In bevorzugter Ausführung sind die Riegel mehrseitig verteilt, insbesondere radial verteilt, angeordnet, vorzugsweise so dass ein Verkippen und/oder Verschieben der mit dem Raketensegment verbundenen Luke verhindert ist. Die Riegel sind insbesondere gleichmäßig verteilt angeordnet. Vorzugsweise sind zumindest einige der Riegel radialsymmetrisch zueinander angeordnet. Vorzugsweise sind die Riegel derart verteilt angeordnet, dass Verschiebungen in Z-Richtung der Luke, also senkrecht zu der Luke, verhindert sind, und/oder Verdrehungen um die X-Richtung der Luke verhindert sind, und/oder Verdrehungen um die Y-Richtung der Luke verhindert sind. Es ist bevorzugt, dass bei einer eckigen, insbesondere rechteckigen, Ausführung der Luke mindestens an drei, bevorzugt mindestens an vier, Seiten und/oder Ecken der Luke Riegel angeordnet sind. Bei einer rechteckigen Ausführung der Luke sind vorzugsweise vier Riegel im Wesentlichen radial um 90° versetzt zueinander angeordnet. Bei einer runden oder ovalen Ausführung der Luke sind vorzugsweise drei Riegel im Wesentlichen radial um 120° versetzt zueinander angeordnet.

In bevorzugter Ausführung weist die Luke eine Arretiermechanik zum Bewegen mehrerer, insbesondere aller, Riegel von einer Öffnungsposition in eine Verschlussposition auf. Bei der Arretiermechanik handelt es sich vorzugsweise um eine Spannzangenmechanik. Vorzugsweise weist die Arretiermechanik einen Drehkolben und/oder mindestens eine Kupplung und/oder mindestens einen Kniehebel zur Bewegung der Riegel auf. Vorzugsweise ist die Arretiermechanik von einer Vorderseite der Luke, insbesondere über eine Betätigungsvorrichtung der Luke, betätigbar. Die Arretiermechanik, vorzugsweise die Betätigungsvorrichtung, ist insbesondere mit einem Werkzeug, bspw. einem Vierkantschlüssel, betätigbar.

In bevorzugter Ausführung weist die Arretiermechanik mindestens eine, insbesondere kraftauslösende, Betätigungsverriegelung zum Sperren der Arretiermechanik in einer Startposition und/oder in einer Endposition auf. In der Startposition befindet sich die Verschlussvorrichtung vorzugsweise in der geöffneten Position. In der Endposition befindet sich die Verschlussvorrichtung vorzugsweise in der geschlossenen Position. Es ist bevorzugt, dass sich die Arretiermechanik in der Startposition und/oder der Endposition gesperrt gegen Bewegungen ist. Bevorzugt ist es, dass mindestens eine Betätigungsverriegelung eine, vorzugsweise verzahnte, Kupplung aufweist, die die Arretiermechanik, vorzugsweise den Drehkolben der Arretiermechanik, gegen Bewegung sperrt. Mindestens eine Betätigungsverriegelung weist vorzugsweis eine, insbesondere mit dem Drehkolben der Arretiermechanik verbundene, Kontermutter auf, die die Arretiermechanik, vorzugsweise den Drehkolben der Arretiermechanik, gegen Bewegung sperrt. Vorzugsweise sichert die Kontermutter die Arretiermechanik vor einer Drehung, indem sie den formschlüssigen Zahneingriff aufrechterhält. Bevorzugt weist mindestens eine Betätigungsverriegelung eine Federvorrichtung auf, die die Arretiermechanik, insbesondere den Drehkolben der Arretiermechanik, in die Startposition und/oder der Endposition drängt. Vorzugsweise wird die Arretiermechanik in der Startposition und/oder der Endposition durch eine oder mehrere Anschlagsflächen des Grundkörpers bestimmt. Insbesondere liegt eine oder mehrere Hebel der Arretiermechanik in der Startposition und/oder der Endposition an der mindestens einen Anschlagsflächen des Grundkörpers an. Vorzugsweise drückt eine oder mehrere Federn die Arretiermechanik, vorzugsweise den mindestens einen Hebel, gegen die mindestens eine Anschlagsfläche.

In bevorzugter Ausführung ist die Luke, vorzugsweise lösbar, abnehmbar von dem Raketensegment ausgeführt. Die Luke ist insbesondere lose vom Raketensegment ausgeführt. Andererseits ist es bevorzugt möglich, dass die Luke beweglich verbunden mit dem Raketensegment, insbesondere mit dem Rahmen des Raketensegments, ausgeführt ist. Es ist bevorzugt, dass die Luke zur beweglichen Verbindung mittelbar oder unmittelbar mindestens ein Scharnier aufweist, das mit dem Raketensegment, insbesondere mit dem Rahmen des Raketensegments, verbindbar oder verbunden ist.

Bei dem erfindungsgemäßen Rahmen für eine Raketensegmentöffnung handelt es sich insbesondere um einen Rahmen für eine Raketensegmentöffnung einer Höhenforschungsrakete. Der Rahmen ist zum, vorzugsweise lösbaren, Verbinden mit einer Luke ausgeführt. Vorzugsweise ist der Rahmen zum verschließenden Verbinden der Raketensegmentöffnung mit der Luke ausgeführt. Der Rahmen ist vorzugsweise mit einem Raketensegment verbindbar oder verbunden, insbesondere anbringbar oder angebracht. Vorzugsweise ist der Rahmen mittels stoffschlüssiger und/oder formschlüssiger und/oder kraftschlüssiger Verbindung mit dem Raketensegment verbindbar. Besonders bevorzugt ist der Rahmen mit dem Raketensegment mittels genieteter und/oder geschraubter Verbindung verbindbar. Der Rahmen weist bspw. Schrauben- und/oder Nietbohrungen auf. Der Rahmen ist vorzugsweise zur Verbindung mit der, insbesondere oben beschriebenen, erfindungsgemäßen Luke ausgeführt. Vorzugsweise ist der Rahmen zur Verstärkung und/oder, zumindest teilweisen, Umrandung der Raketensegmentöffnung ausgeführt. Der Rahmen weist eine Radialdichtung zum druckdichten Abdichten zwischen dem Rahmen und der Luke auf. Der Rahmen weist insbesondere eine Zylinderform auf. Vorzugsweise weist die Zylinderform eine rechteckige, quadratische, runde oder ovale Querschnittsfläche auf. Es handelt sich vorzugsweise um eine Hohlzylinderform.

In bevorzugter Ausführung weist der Rahmen eine, insbesondere umlaufende, Radialfläche auf. Es handelt sich vorzugsweise um eine innere Radialfläche. Die Radialfläche weist vorzugsweise eine, zumindest teilweise, insbesondere vollständig, polierte, bevorzugt elektropolierte, Oberfläche auf. Vorzugsweise entspricht die Radialfläche zumindest einem Teil der inneren Hohlzylinderform des Rahmens. Die Radialfläche ist vorzugsweise senkrecht zu zu mindestens einer Oberfläche des Rahmens ausgeführt.

In bevorzugter Ausführung ist die Radialdichtung mit der Radialfläche, insbesondere umlaufend, verbunden ist. Es ist bevorzugt, dass die Radialdichtung in einer Ebene angeordnet ist. Die Radialdichtung ist vorzugsweise parallel zu zu mindestens einer Oberfläche des Rahmens ausgeführt.

In bevorzugter Ausführung weist die Radialfläche eine, insbesondere umlaufende, Nut auf. Die Nut ist insbesondere zur Aufnahme der Radialdichtung ausgeführt. Es ist bevorzugt, dass die Nut in einer Ebene angeordnet ist. Die Nut ist vorzugsweise parallel zu zu mindestens einer Oberfläche des Rahmens ausgeführt. Es ist bevorzugt, dass die Radialdichtung in der Nut der Radialfläche aufgenommen ist. Insbesondere ist die Radialdichtung, zumindest in einem ersten Zustand der Radialdichtung, vollständig in der Nut aufgenommen. Vollständig aufgenommen meint hierbei insbesondere, dass die Radialdichtung vollständig innerhalb des Nutvolumens angeordnet ist, vorzugsweise bündig mit der Nut abschließt. Vorzugsweise entspricht die Dicke der Radialdichtung im Wesentlichen der Breite der Nut und/oder die Höhe der Radialdichtung entspricht im Wesentlichen der Tiefe der Nut.

In bevorzugter Ausführung weist der Rahmen eine Verbindungsfläche zur Verbindung des Rahmens mit dem Raketensegment auf. Die Verbindungsfläche weist insbesondere eine Dichtfläche zur druckdichten Verbindung mit dem Raketensegment auf, besteht insbesondere daraus. Die Verbindungsfläche ist vorzugsweise zur stoffschlüssigen und/oder kraftschlüssigen und/oder formschlüssigen Verbindung mit dem Raketensegment ausgeführt. Die Verbindungsfläche ist vorzugsweise gebogen ausgeführt. Vorzugsweise entspricht die Kontur der Verbindungsfläche der, insbesondere inneren, Kontur des Raketensegments und/oder der Krümmungsradius der Verbindungsfläche entspricht dem, insbesondere inneren, Krümmungsradius des Raketensegments. Vorzugsweise weist der Rahmen zusätzlich oder alternativ zur Verbindungsfläche eine, insbesondere der Verbindungsfläche gegenüberliegende, Außenfläche auf.

Vorzugweise ist die Außenfläche im Wesentlichen eben, insbesondere planar. Es ist bevorzugt, dass die Radialfläche des Rahmens zwischen der Außenfläche und der Verbindungsfläche ausgeführt ist. Vorzugsweise ist die Radialfläche senkrecht zur Außenfläche ausgeführt. Die Radialdichtung und/oder die Nut ist vorzugsweise parallel zur Außenfläche angeordnet. Es ist bevorzugt, dass die Schrauben- und/oder Nietbohrungen von der Außenfläche ausgehen. Somit ist vorzugsweise eine ebene Auflagefläche für Schraubenköpfe umgesetzt.

In bevorzugter Ausführung weist der Rahmen mehrere Riegelöffnungen zur Aufnahme von Riegeln der Luke und/oder zur Aufnahme von Laschen der Riegel der Luke auf. Es handelt sich vorzugsweise um Riegelaufnahmen. Vorzugsweise weist der Rahmen mindestens drei, bevorzugt mindestens vier, besonders bevorzugt mindestens acht Riegelaufnahmen auf. Die Riegelaufnahmen sind vorzugsweise zur Aufnahme der Riegel der insbesondere oben beschriebenen erfindungsgemäßen Luke ausgeführt. Es ist bevorzugt, dass mindestens eine, insbesondere alle, der Riegelaufnahmen in der Radialfläche des Rahmens und/oder der Außenfläche des Rahmens angeordnet sind. Die Riegelaufnahmen sind insbesondere zum Eingriff und/oder Hintergriff der Riegel ausgeführt. Mindestens einer der Riegelaufnahmen, insbesondere alle, weisen vorzugsweise Nuten und/oder Taschen auf, bestehen bevorzugt daraus. Es ist bevorzugt, dass die Nuten und/oder Taschen einseitig oder zweiseitig geöffnet sind. Zweiseitig meint insbesondere, dass die Nuten und/oder Taschen an einer Stirnseite und einer an die Stirnseite angrenzenden Seite geöffnet sind. Es ist bevorzugt, dass mindestens eine der Riegelöffnungen, insbesondere alle, weist/weisen, vorzugsweise eckige und/oder rundlich, Verjüngung an den Riegelöffnungsenden zur Zentrierung der eingreifenden Riegel auf.

Alternativ oder zusätzlich zur Ausführung des Rahmens mit mehreren Riegelöffnungen ist es bevorzugt, dass der Rahmen eine Verschlussvorrichtung zur lösbaren Verbindung des Rahmens mit einer Luke aufweist. Bei der Verschlussvorrichtung handelt es sich vorzugsweise um eine Verriegelung. Die Verschlussvorrichtung ist vorzugsweise zur formschlüssig lösbaren Verbindung des Rahmens mit der Luke ausgeführt. Insbesondere ist die Verschlussvorrichtung schraubenlos ausgeführt, weist somit keine Schraubenverbindung auf. Die Verschlussvorrichtung weist vorzugsweise zumindest eine geschlossene Position auf, bei der der Rahmen mit der Luke verschlossen ist. Die Verschlussvorrichtung weist vorzugsweise zumindest eine geöffnete Position auf, bei der die Luke vom Rahmen lösbar und/oder gelöst ist. Die Verschlussvorrichtung weist vorzugsweise eines oder mehrere Merkmale der, insbesondere oben beschriebenen, Verschlussvorrichtung der erfindungsgemäßen Luke auf.

In bevorzugter Ausführung ist die Radialdichtung der Luke und/oder des Rahmens expandierbar, insbesondere aufblasbar. Vorzugsweise ist die Radialdichtung hohl. Es ist bevorzugt, dass die Radialdichtung durch Befüllung mit Fluid, insbesondere Gas, wie bspw. Stickstoff und/oder Flüssigkeit, wie bspw. Öl, expandierbar ist. Die Radialdichtung weist vorzugsweise einen Schlauch, insbesondere einen Pneumatikschlauch auf, besteht bevorzugt daraus. Der Schlauch weist vorzugsweise Silikon auf, besteht insbesondere daraus. Bevorzugt weist der Schlauch eine runde, ovale, rechteckige oder quadratische Querschnittsfläche auf. Vorzugsweise ist die Radialdichtung derart ausgeführt, dass sie bei einer Expansion aus der Nut hervortritt, um so mit einer Gegenfläche eine Dichtung zu erzeugen. Bei der Radialdichtung handelt es sich insbesondere um eine Radialdichtung mit Memoryeffekt. Bevorzugt ist die Radialdichtung mit Memoryeffekt derart ausgeführt, dass die Radialdichtung nach einer Expansion wieder in die Ausgangsposition und/oder in eine Ausgangsform zurückkehrt. Vorzugsweise kehrt die Radialdichtung nach einer Expansion wieder innerhalb der Nut zurück. Insbesondere fällt die Radialdichtung ohne Druckbeaufschlagung so in die Nut zurück, dass sie zumindest bündig abschließt. Hierdurch ergibt sich der Vorteil, dass bei einer Bewegung der Luke, insbesondere bei einem Einsetzten der Luke, die Radialdichtung nicht durch Abscheren beschädigt wird.

Bei dem erfindungsgemäßen Raketensegment handelt es sich insbesondere um ein Raketenrumpfsegment. Vorzugsweise handelt es sich um ein Raketensegment einer Höhenforschungsrakete. Das Raketensegment weist eine Öffnung, auch als Raketensegmentöffnung zu bezeichnen, auf. Die Öffnung ist insbesondere für einen Zugriff auf das Innere des Raketensegments, vorzugsweise bei einem Late-Access, ausgeführt. Ferner weist das Raketensegment einer Luke zum, insbesondere druckdichten, Verschließen der Öffnung auf. Das Raketensegment weist vorzugsweise eine Vertiefung zur Aufnahme einer Blende der Luke auf. Die Kontur der Vertiefung entspricht insbesondere der Kontur der Blende. Vorzugsweise entspricht die Tiefe der Vertiefung der Dicke der Blende, sodass insbesondere eine Bündige Aufnahme der Blende in der Vertiefung möglich ist. Vorzugseise entspricht die Vertiefung einer formschlüssigen Aufnahme für die Blende. Bei der Vertiefung handelt es sich insbesondere um eine Tasche, Das Raketensegment weist einen Rahmen zur mittelbaren oder unmittelbaren Verbindung der Luke mit dem Raketensegment auf. Die Verbindung zwischen Luke und Rahmen ist insbesondere druckdicht. Die Luke weist eines oder mehrere der Merkmale der, insbesondere oben beschriebenen, erfindungsgemäßen Luke auf. Alternativ oder zusätzlich zu dieser Ausführung der Luke weist der Rahmen eines oder mehrere der Merkmale des, insbesondere oben beschriebenen, erfindungsgemäßen Rahmens auf. Der Rahmen ist vorzugsweise von innen an das Raketensegment genietet und/oder geschraubt. Andererseits ist vorzugsweise auch eine Fertigung in Integralbauweise möglich, d. h. insbesondere Rahmen und Raketensegment werden aus einem Halbzeug hergestellt und sind stoffschlüssig verbunden. Es ist bevorzugt, dass das Raketensegment zum Verschließen der Öffnung schraublos, vorzugsweise schraubenlos ausgeführt ist, sodass insbesondere das Raketensegment zum Verschließen der Öffnung keinerlei Schrauben aufweist.

In bevorzugter Ausführung weist das Raketensegment ein radiales Spaltmaß zwischen der Luke und dem Rahmen von max. 1 mm, bevorzugt max. 0,5 mm, besonders bevorzugt max. 0,3 mm. Das Spaltmaß beträgt vorzugsweise 0,5 +/-0,1 mm. Das radiale Spaltmaß zwischen der Luke und dem Rahmen beträgt insbesondere 0,6 mm bis 0,4 mm, besonders bevorzugt 0,5 mm.

In bevorzugter Ausführung weist das Raketensegment ein Drucksystem zum Einstellen eines Dichtungsdrucks der Radialdichtung der Luke und/oder des Rahmens auf. Das Drucksystem weist insbesondere einen Druckspeicher, wie bspw. eine Druckkammer, und/oder ein Umbilical-System, und/oder eine selbstsperrende Kupplung, und/oder ein Ventil, vorzugsweise Magnetventil auf. Das Umbilical-System weist vorzugsweise mindestens einen Schlauch und/oder mindestens einen Anschluss auf. Die Kupplung ist vorzugsweise zur externen Druckversorgung ausgeführt. Vorzugsweise weist das Drucksystem einen Drucksensor auf. Das Drucksystem weist insbesondere auf: einen Druckspeicher, und/oder ein Umbilical-System, und/oder eine selbstsperrende Kupplung (516), und/oder ein Ventil, vorzugsweise Magnetventil.

Es ist bevorzugt, dass innerhalb des Raketensegments mindestens ein, vorzugsweise optisches und/oder organisches, Experiment angeordnet ist. Vorzugsweise ist das mindestens eine Experiment druckkammerfrei innerhalb des Raketensegments angeordnet, sodass insbesondere keine zusätzliche Drucckammer innerhalb des Raketensegments vorgesehen ist.

Bei dem erfindungsgemäßen Verfahren zur Benutzung eines Raketensegments mit einer Raketensegmentöffnung handelt es sich insbesondere um ein Verfahren zur Benutzung eines Raketensegments einer Höhenforschungsrakete. Insbesondere handelt es sich bei dem Verfahren um ein Verfahren zum Verschlie-ßen einer Raketensegmentöffnung eines Raketensegments. Bei der Raketensegmentöffnung handelt es sich insbesondere um eine Late-Access-Öffnung. Das Verfahren wird unter Verwendung einer Luke und einem Rahmen für eine Raketensegmentöffnung durchgeführt, wobei es sich bei der Luke um eine, insbesondere oben beschriebenen, erfindungsgemäße Luke handelt, und/oder es sich bei dem Rahmen um einen, insbesondere oben beschriebenen, erfindungsgemäßen Rahmen handelt. Alternativ wird das Verfahren unter Verwendung eines, insbesondere oben beschriebenen, erfindungsgemäßen Raketensegments durchgeführt. Das Verfahren weist den Schritt des Verschließens der Raketensegmentöffnung mit der Luke auf. Vorzugsweise kommt es zu einem druckdichten und/oder formschlüssigen Verschließen. Insbesondere erfolgt ein schraubloses, vorzugsweise schraubenlosen Verschließen.

In bevorzugter Ausführung herrscht beim Verschließen ein Dichtungsdruck von mindestens 3 bar, bevorzugt mindestens 5 bar, besonders bevorzugt mindestens 7 bar. Der Dichtungsdruck herrscht insbesondere im Inneren der Radialdichtung. Vorzugsweise erfolgt ein Bedrucken der Radialdichtung, vorzugsweise auf mindestens 3 bar, bevorzugt mindestens 5 bar, besonders bevorzugt mindestens 7 bar. Bei den vorstehenden Druckangaben handelt es sich insbesondere um Relativdrücke.

In bevorzugter Ausführung erfolgt während eines Startvorgangs einer Rakete, die das Raketensegment aufweist, insbesondere während des Countdowns, und vor dem Verschließen der Raketensegmentöffnung ein Late-Access auf das Innere des Raketensegment durch die Raketensegmentöffnung. Vorzugsweise erfolgt dabei mindestens einer der folgenden Schritte: Eingeben, insbesondere Einstellen, eines Experiments und/oder Einrichten einer Untersuchungsvorrichtung. Das Experiment weist vorzugsweise organische Proben auf, besteht insbesondere daraus. Bei der Untersuchungsvorrichtung handelt es sich vorzugsweise um eine optische Untersuchungsvorrichtung. Das Einrichten der Untersuchungsvorrichtung beinhaltet insbesondere ein Einstellen und/oder Ausrichten der Untersuchungsvorrichtung und/oder ein Einbauen einer Probenzelle.

Eine weitere Erfindung besteht in einem Verfahren zur Benutzung einer Höhenforschungsrakete, wobei das Verfahren die Durchführung eines, insbesondere oben beschriebenen, erfindungsgemäßen Verfahrens zur Benutzung eines Raketensegments mit einer Raketensegmentöffnung aufweist.

Es ist bevorzugt, dass einer der erfindungsgemäßen Gegenstände, insbesondere die erfindungsgemäße Luke, der erfindungsgemäße Rahmen und das erfindungsgemäße Raketensegment und/oder das erfindungsgemäße Verfahren, eines oder mehrere Merkmale mindestens eines oder mehrere der anderen, insbesondere oben beschriebenen, erfindungsgemäßen Gegenstände aufweist.

Nachfolgend wird die Erfindung anhand bevorzugter Ausführungsformen unter Bezugnahme auf die anliegenden Zeichnungen näher erläutert.

Es zeigen:
- Fign. 1-2: eine schematische Draufsicht auf die Rückseite einer Ausführungsform einer erfindungsgemäßen Luke in einem ersten und zweiten Zustand,
- Fig. 3: eine schematische Schnittansicht entlang III aus Fig. 2,
- Fig. 4: eine schematische, perspektivische Ansicht einer Ausführungsform eines erfindungsgemäßen Raketensegments mit einer Ausführungsform eines erfindungsgemäßen Rahmens,
- Fig. 5: eine schematische, perspektivische Ansicht einer weiteren Ausführungsform eines erfindungsgemäßen Raketensegments mit einer weiteren Ausführungsform eines erfindungsgemäßen Rahmens,
- Fig. 6: eine Draufsicht auf die Rückseite einer weitere Ausführungsform einer erfindungsgemäßen Luke in einem ersten Zustand,
- Fig. 7: eine Schnittansicht entlang VII aus Fig. 6,
- Fig. 8: eine Detailansicht gemäß VIII aus Fig. 7,
- Fig. 9: eine Draufsicht auf die Rückseite der Luke aus Fig. 6 mit Innenansicht,
- Fign. 10a-10b: Detailansichten auf die Luke aus Fig. 9 in einem zweiten und dritten Zustand,
- Fig. 11: eine Draufsicht auf die Rückseite einer weitere Ausführungsform eines erfindungsgemäßen Rahmens,
- Fig. 12: eine Schnittansicht des Rahmens aus Fig. 11 entlang XI,
- Fig. 13: eine Seitenansicht eines Raketensegments,
- Fig. 14: eine Schnittansicht des Raketensegments aus Fig. 13 entlang XIV, und
- Fig. 15: eine Seitenansicht einer Rakete mit einer weiteren Ausführungsform eines erfindungsgemäßen Raketensegments mit einer erfindungsgemäßen Luke.

Ähnliche oder identische Bauteile oder Elemente werden in den Figuren mit den gleichen Bezugszeichen bzw. Variationen davon (z.B. 18a, 18b, etc.) identifiziert. Insbesondere zur verbesserten Übersichtlichkeit werden, vorzugsweise bereits identifizierte Elemente nicht in allen Figuren mit Bezugszeichen versehen.

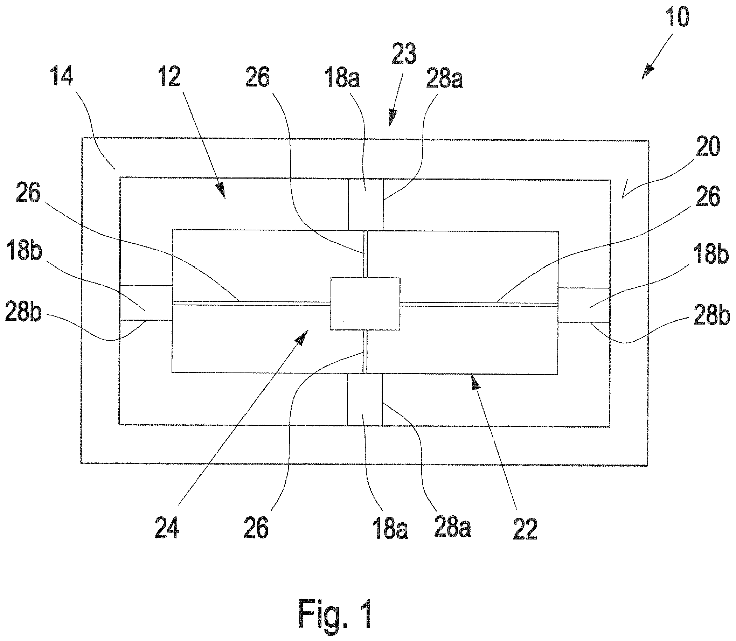

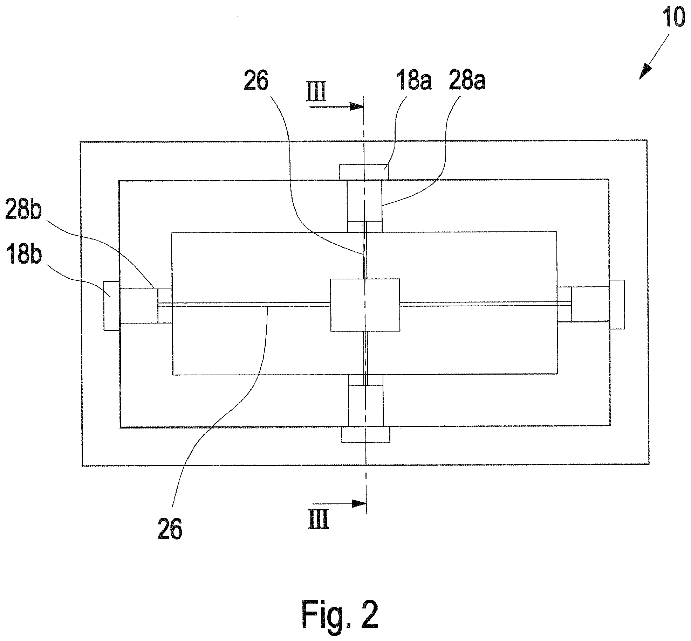

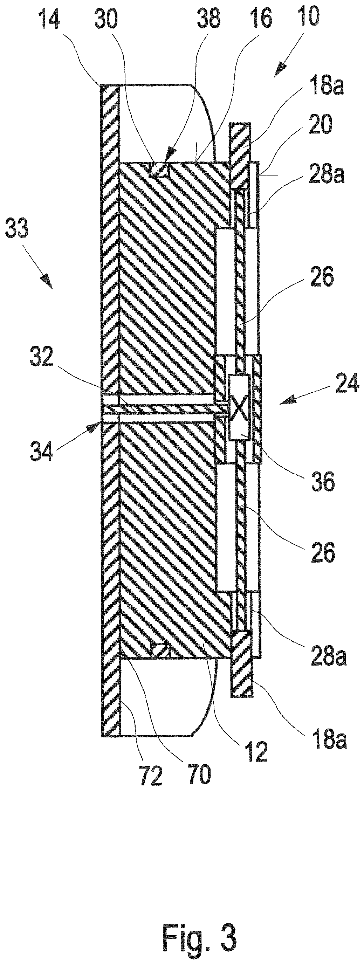

Figur 1 zeigt eine schematische Draufsicht auf die Rückseite einer Ausführungsform einer erfindungsgemäßen Luke 10. Figur 2 zeigt die Luke aus Figur 1 in einem zweiten Zustand. Figur 3 zeigt eine Schnittansicht entlang III aus Figur 2.

Die Luke 10 weist einen Grundkörper 12 mit einer ersten Fläche 72 und einer der ersten Fläche 72 gegenüberliegenden zweiten Fläche 20 auf. Der Grundkörper 12 ist über die ersten Fläche 72 des Grundkörpers 12 und eine Blendenrückfläche 72 mit einer Blende 14 verbunden. Die zweiten Fläche 20 ist vorzugsweise eben ausgeführt.

Die Luke 10 weist vier jeweils in T-Nuten 28a, 28b des Grundkörpers 12 gelagerte Riegel 18a, 18b auf, wobei die Riegel 18a, 18b insbesondere als Verschlusslaschen ausgeführt sind. Die Riegel 18a, 18b bilden eine Verschlussvorrichtung 23 aus.

Die Riegel 18a, 18b sind über eine Arretierungsmechanik 24 von einer ersten Position, gemäß Figur 1, in eine zweite Position, gemäß Figur 2 bewegbar. Die erste Position entspricht insbesondere einer geöffneten Position der Verschlussvorrichtung 23 und die zweite Position entspricht insbesondere einer geschlossenen Position der Verschlussvorrichtung 23.

Die Arretiermechanik 24 weist zur Bewegung der Riegel 18a, 18b Hebel 26, 32 auf. Der Hebel 32 kann durch eine Betätigungsvorrichtung 34, insbesondere auf einer Außenseite 33 der Luke 10, bspw. mit einem Werkzeug, bewegt werden. Über eine Übertragungsvorrichtung 36 bewegt der Hebel 32 die Hebel 26, die sodann die Riegel 18a, 18b bewegen, insbesondere verschieben.

Der Grundkörper weist eine Radialfläche 16 auf. Die Radialfläche 16 weist eine Nut 38 auf, in der eine Radialdichtung 30 angeordnet ist. Die Radialdichtung 30 ist vorzugsweise expandierbar, insbesondere aufblasbar, ausgeführt. Die Radialdichtung 30 ist in einer Ausgangsposition vorzugsweise bündig in der Nut 38 angeordnet. Nach einer Expansion der Radialdichtung 30 tritt die Radialdichtung 30 vorzugsweise aus der Nut 38 heraus. Vorzugsweise weist die Radialdichtung 30 einen Memory-Effekt auf, sodass sich die Radialdichtung 30 nach der Expansion wieder in die Ausgangsposition zurückbewegt. Über die Radialdichtung 30 kann vorzugsweise ein druckdichtes Verschließen einer Raketensegmentöffnung 502 erfolgen.

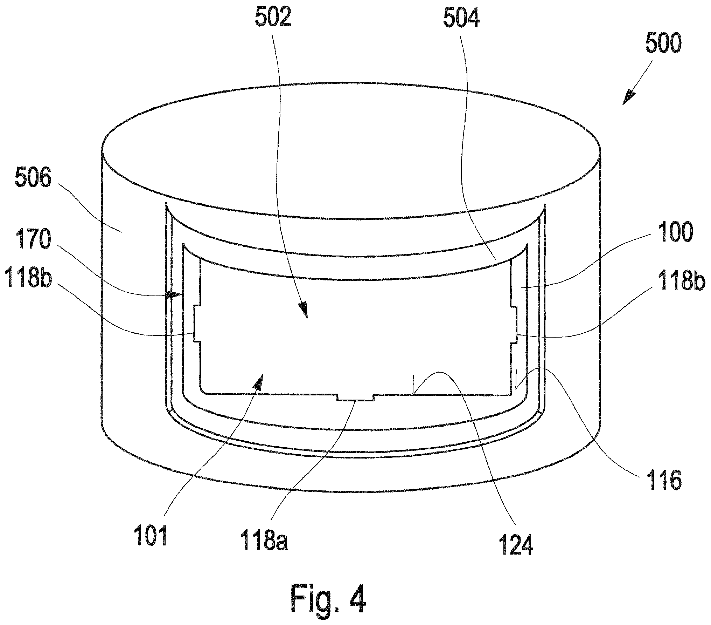

Figur 4 zeigt eine schematische, perspektivische Ansicht einer Ausführungsform eines erfindungsgemäßen Raketensegments 500 mit einer Ausführungsform eines erfindungsgemäßen Rahmens 100. Der Rahmen weist eine Rahmenöffnung 101 auf.

Das Raketensegment 500 ist hohlzylinderförmig (Hohlzylinderform 506) ausgeführt und weist eine Raketensegmentöffnung 502, insbesondere ausgeführt als aufgefräster Durchbruch, auf.

Auf der Innenseite des Raketensegments 500 ist um die Raketensegmentöffnung 502 ein Rahmen 100 über eine Verbindungsfläche 170 des Rahmens mit dem Raketensegments 500, insbesondere genietet und/oder verschraubt, verbunden.

Der Rahmen 100 weist eine der Verbindungsfläche 170 gegenüberliegende Außenfläche 124 auf. Die Außenfläche 124 ist vorzugsweise eben.

Zwischen der Außenfläche 124 und der Verbindungsfläche 170 ist eine Radialfläche 116 angeordnet. Die Radialfläche 116 ist vorzugsweise senkrecht zur Außenfläche 124 ausgeführt. Die Radialfläche ist vorzugsweise elektropoliert.

Der Rahmen 100 weist, insbesondere auf der Außenfläche 124 angeordnete, Riegelöffnungen 118a, 118b zur Aufnahme von Riegeln 18a, 18b einer Luke 10 auf. Vorzugsweise sind die Riegelöffnungen 118a, 118b zur Aufnahme der Riegel 18a, 18b der Luke 10 aus Figur 1 ausgeführt. Bei den Riegelöffnungen 118a, 118b handelt es sich vorzugsweise um Taschen und/oder Nuten.

In die Raketensegmentöffnung 502 kann eine Luke 10, insbesondere die Luke 10 gemäß Figur 1, eingesetzt werden, um derart die Raketensegmentöffnung 502, vorzugsweise druckdicht, zu verschließen. Durch ein Eingreifen von Riegeln 18a, 18b einer eingesetzten Luke 10, insbesondere der Luke 10 aus Figur 1, in die Riegelöffnungen 118a, 118b kann eine lösbare, formschlüssige Verbindung erfolgen.

Durch ein Anliegen einer Radialdichtung 30 einer Luke 10, insbesondere der Luke 10 aus Figur 1, an der Radialfläche 116 kommt es vorzugsweise zu einem druckdichten Verschließen der Raketensegmentöffnung 502.

Das Raketensegment 500 weist eine Vertiefung 504, insbesondere Tasche, zur Aufnahme der Blende 14 der Luke 10, vorzugsweise gem. Fig. 1, auf. Die Kontur, vorzugsweise die Innenkontor, der Vertiefung 504 entspricht insbesondere der Kontur, vorzugsweise die Außenkontur, der Luke 10.

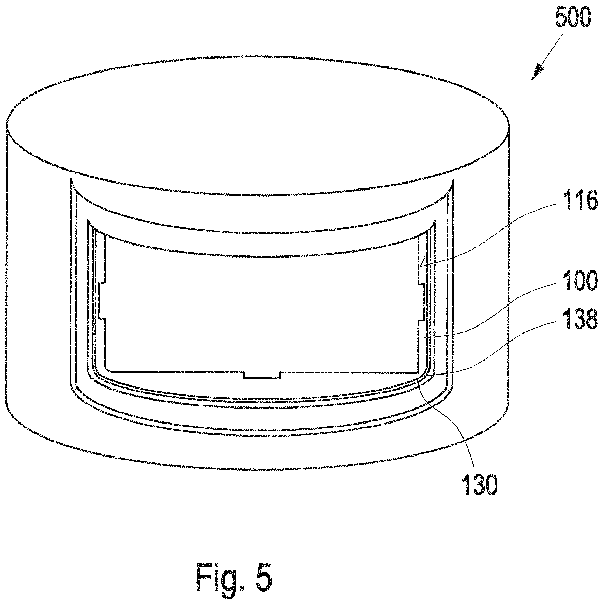

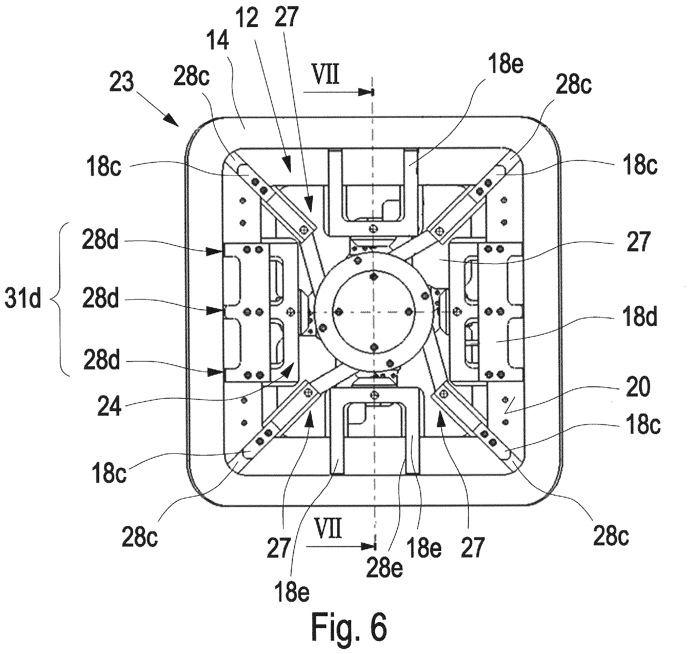

Figur 6 zeigt eine weitere Ausführungsform eines erfindungsgemäßen Raketensegments 500 mit einer weiteren Ausführungsform eines erfindungsgemäßen Rahmens 100, wobei die Ausführungsformen auf den Ausführungsformen der Figur 5 basieren.

Die Ausführungsform des Rahmens 100 aus Figur 6 unterscheidet sich von der Ausführung aus Figur 5 dadurch, dass die Radialfläche 116 des Rahmens 100 aus Figur 6 eine Nut 138 aufweist, in der eine Radialdichtung 130 angeordnet ist. Die Radialdichtung 130 ist vorzugsweise bündig in der Nut 138 angeordnet, wobei die Radialdichtung 130 expandierbar, insbesondere aufblasbar, ist und durch die Expansion aus der Nut austritt. Vorzugsweise weist die Radialdichtung 130 einen Memory-Effekt auf, sodass sich die Radialdichtung 130 nach der Expansion wieder in die Ausgangslage zurückbewegt. Über die Radialdichtung 130 kann vorzugsweise ein druckdichtes Verschließen einer Raketensegmentöffnung 502 erfolgen.

Bevorzugt möglich ist das druckdichte Verschließen der Raketensegmentöffnung 502 aus Figur 5 mit der Luke 10 aus Figur 1. Somit kann bspw. bei nebeneinander angeordneter Radialdichtung 30 der Luke 10 und Radialdichtung 130 des Rahmens 100 eine doppelte Dichtung erfolgen. Alternativ ist es möglich eine Luke 10 ohne Radialdichtung 30 in die Raketensegmentöffnung 502 aus Figur 5 einzusetzen und durch die Radialdichtung 130 des Rahmens 100 trotzdem ein druckdichtes Verschließen umzusetzen. Vorzugsweise kann hierbei eine Luke 10 genutzt werden, die der Luke 10 aus Figur 1, jedoch ohne die Radialdichtung 30 und vorzugsweise ohne die Nut 38, entspricht.

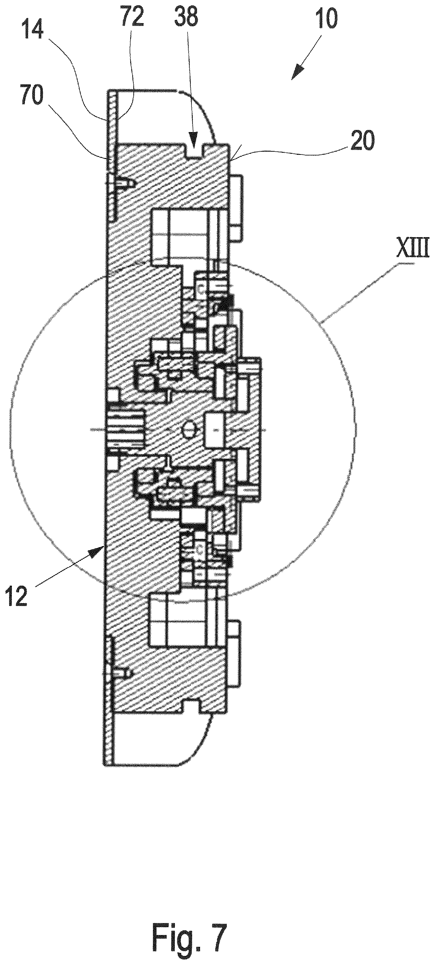

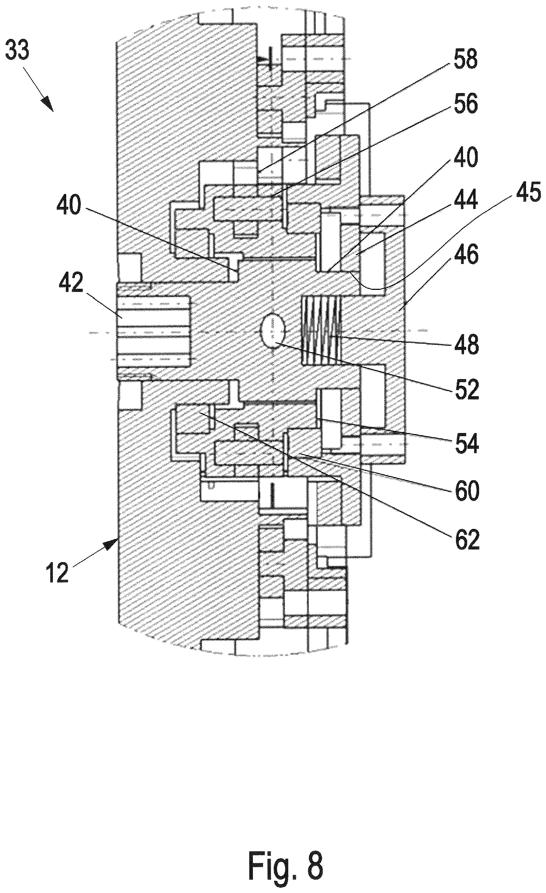

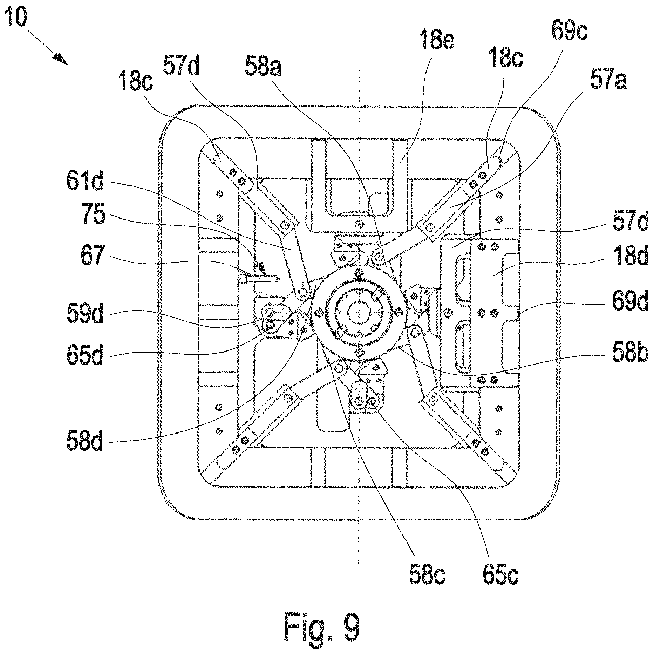

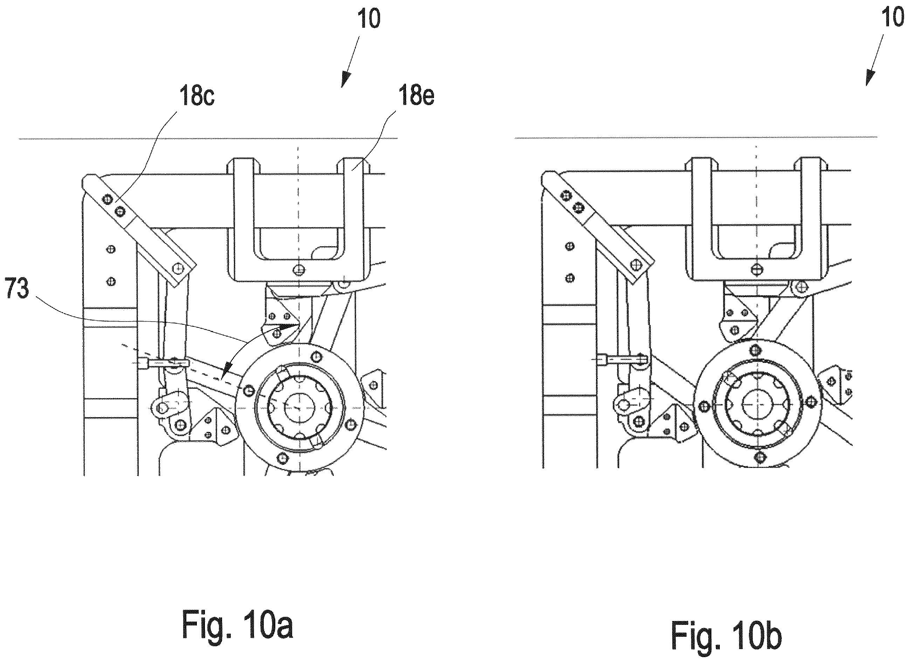

Figur 6 zeigt eine Draufsicht auf die Rückseite einer weiteren Ausführungsform einer erfindungsgemäßen Luke 10 in einem ersten Zustand. Figur 7 zeigt eine Schnittansicht entlang VII aus Fig. 6, Figur 8 zeigt eine Detailansicht gemäß VIII aus Fig. 7, Fig. 9 zeigt eine Draufsicht auf die Rückseite der Luke 10 aus Fig. 6 mit Innenansicht, und Figur 10a zeigt eine Detailansichten auf die Luke 10 aus Fig. 9 in einem zweiten Zustand, wobei Figur 10b einen dritten Zustand zeigt.

Die Luke 10 aus Figur 6 weist einen Grundkörper 12 mit einer ersten Fläche 72 und einer der ersten Fläche 72 gegenüberliegenden zweiten Fläche 20 auf. Der Grundkörper 12 ist über die ersten Fläche 72 des Grundkörpers 12 und eine Blendenrückfläche 72 mit einer Blende 14 verbunden. Die zweite Fläche 20 ist vorzugsweise eben ausgeführt.

Die Ausführung der Luke 10 aus Figur 6 weist eine Verschlussvorrichtung 23 mit mehreren, insbesondere als Laschen ausgeführten, Riegeln 18c, 18d, 18e auf, die in Nuten 28c, 28b, 28d des Grundkörpers 12 gelagert sind.

Die Luke 10 weist eine Arretierungsmechanik 24 mit einem Drehkolben 40 auf.

Bspw. mit einem Vierkantschlüssel wird der Drehkolben 40 auf einer Außenseite 33 der Luke 10 eingedrückt. Die Druckfeder 48 wird gespannt. Die Bohrung im Grundkörper 12 und der Zapfen der Deckscheibe 46 führen den Drehkolben 40. Ein Querbolzen in der Querbohrung 52 des Drehkolbens 40 kann sich axial in der Nut der Kupplung 54 bewegen. Im eingedrückten Zustand werden die Zähne 45 des Drehkolbens 40 aus der Verzahnung der Arretierscheibe 44 bewegt. Die Arretiermechanik ist nun geöffnet und eine Rotation um 90° ist möglich. Beim Schließen der Arretiermechanik, insbesondere nach 90° Drehung des Kolbens durch einen Vierkantschlüssel, drückt die Feder 48 den Drehkolben 40 nach au-ßen (hier links) und die Zähne 45 von Drehkolben 40 und Arretierscheiben 44 greifen ineinander. Die Arretierscheibe 44 ist fest mit dem Grundkörper 12 verbunden. Dabei reicht der Federdruck aus die Axialdichtung 50 zu verpressen. Zusätzlich kann vorzugsweise eine Kontermutter auf das Außengewinde 42 des Drehkolbens 40 auf den Drehkolben 40 angezogen werden, um zusätzliche Sicherheit gegenüber der Dichtung 50 und der Arretierung zu gewinnen. Ferner weist die Luke 10 Hebel 58 zur Bewegung der Riegel 18c, 18d, 18 auf. Die Hebel 58 sind mittels Stiften 56 radial gelagert. Die Kupplung 54 wird von einem inneren Radiallager 60 und einem äußeren Radiallager 62 gelagert.

Figur 9 zeigt eine Innenansicht der Luke 10 zur Darstellung der Arretiermechanik 24. In Figur 9 sind zur Übersichtlichkeit einige Bauteile, wie bspw. der links und unten dargestellten Riegel 18d, 18e (Figur 6), Arretierscheibe 44, ein zweites Federbein und die Deckscheibe ausgeblendet. Die Arretiermechanik 24 ist in Figur 9 in geöffneter Position dargestellt, die einer geöffneten Position der Verschlussvorrichtung 23 entspricht. Bei geöffneter Arretiermechanik 24 lässt sich der Drehkolben 40 drehen und nimmt die Kupplung 54 mit.

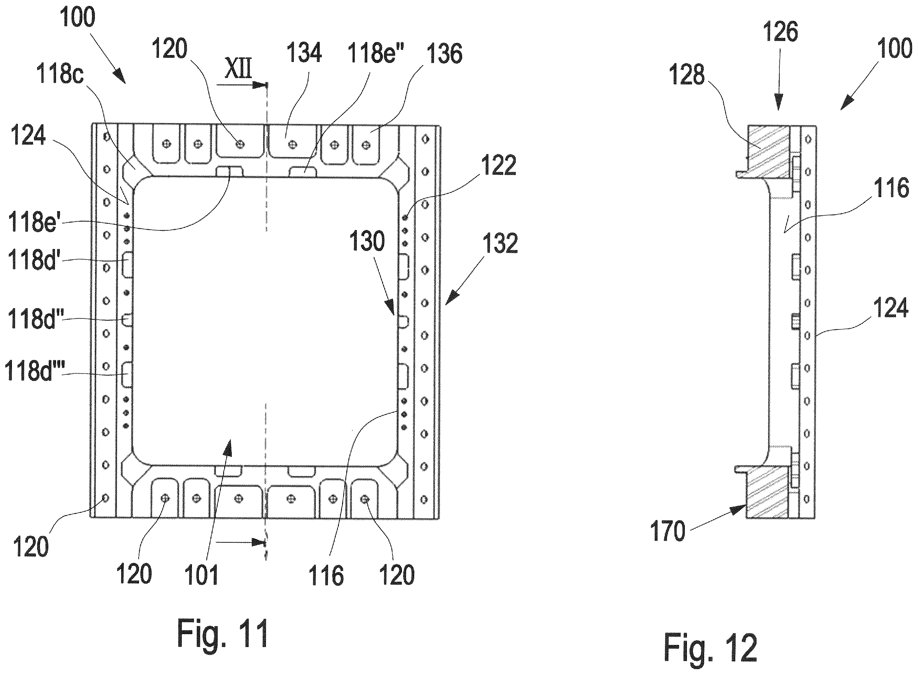

Die Kupplung 54 lagert radial beweglich je um 90° versetzt die Hebel 58a-58d. Die gegenüberliegenden Enden der Hebel 58a-58d sind mit den jeweiligen Hebel 61a-61d und den Hebel 59a-59d ebenfalls radial beweglich verstiftet. Die Hebel 61a-61d verbinden die in den Ecken sitzenden Verschlussgleitstücke 57a-57d. Die Hebel 59a-59d lagern auf Zapfen 65a-65d, die in den Lagerpunkten im Grundkörper verschraubt sind. Die Hebel 63a-63d verbinden die restlichen Gleitstücke. Die Gleitstücke 57d mit den jeweils dreifachen T-Nut Führungen 31d mit drei T-Nuten 28d werden durch Federn 75, die auf den Federführungen 67 gehalten werden, "aufgedrückt". Die Feder 75 und Mechanik stellen eine Energiesenke da. Auf den Gleitstücken 57a-57d sind mit Ausnahme der zweifachgeführten Gleitstücken Riegel 18c-18e, insbesondere ausgeführt als Laschen, aufgeschraubt. Die Riegel 18c-18e werden beim Verschließen bewegt und können insbesondere in, vorzugsweise als Taschen ausgeführt, Riegelöffnungen 118c-118e des Rahmens 100 (vgl. Figur 11) eingreifen. Fasen 69c, 69d sorgen für eine genaue Positionierung, um die Spaltmaße möglichst genau einzuhalten. Dies ist für die Dichtung besonders vorteilhaft.

Figur 10a zeigt die Luke 10 aus Figur 9, in einer Totpunktposition, vorzugsweise der Arretierungsmechanik 24 und/oder der Verschlussvorrichtung 23. Figur 10b zeigt die Luke 10 aus Figur 9, in einer geöffneten Position, vorzugsweise der Arretierungsmechanik 24 und/oder der Verschlussvorrichtung 23.

Im geöffneten Zustand liegen die Hebel 59a-59d an der Auflagekante der Lagerpunkte an und werden durch die Federn 75 dort gehalten. Durch weiteres Drehen werden die Federn 75 weiter gespannt, die Gleitstücke 59a-59d bewegen die Riegel 18c-18e, sodass diese insbesondere in die Riegelöffnungen 118c-118e des Rahmens 100 (vgl. Figur 11) eingeschoben werden können und ferner die Luke zentrieren bis ein Verdrehwinkel 73 von ca. 70° erreicht ist. Das ist die Position, in der die Federn 75 am meisten gespannt werden. Die Achse des Drehkolbens 40, der Kupplung 54, die Achse der Verstiftung der Hebel 58a-58d und die Achse der Verstiftung der Hebel 59a-59d/61a-61d stehen vorzugsweise in einer Achse zueinander, sodass sich eine Totpunkt-Lage ergibt. Eine weitere Drehung der Kupplung 54, insbesondere ≤20°, bewirkt eine teilweise Entspannung der Federn 75. Hebel 58a-58d werden an die Anschlagkante am Lagerpunkt gedrückt. Die Mechanik befindet sich in einer Energiesenke. Das bedeutet, dass die Hebelmechanik nur durch Drehen der Kupplung 54 wieder bewegt werden kann. Ein Öffnen über die Gleitstücke 57a-57d ist nicht möglich, da die Federn 75 zum Öffnen durch Drehen in die andere Richtung erst weiter gespannt werden müssen, damit die Hebel über den Totpunkt gelangen können. Hebel 63a-63d dienen der Ankopplung an die Gleitstücke 57a-57d und ist so auf Hebel 59a-59d positioniert, dass eine Übersetzung zum Spannen der Feder 75 vorliegt. Die Zähne 45 des Drehkolbens 40 sind so angeordnet, dass sie bei korrekter Verschlussstellung in die Arretierscheibe 44 einrasten und der Drehkolben 40 durch die Rückstellfeder axial nach außen gedrückt wird.

Die Riegel 18c aus Figur 6 sind insbesondere zum Eingreifen in die Riegelöffnungen 118c des Rahmens 100 aus Figur 11 ausgeführt. Die Riegel 18d aus Figur 6 sind insbesondere zum Eingreifen in die Riegelöffnungen 118d des Rahmens 100 aus Figur 11 ausgeführt. Die Riegel 18e aus Figur 6 sind insbesondere zum Eingreifen in die Riegelöffnungen 118e des Rahmens 100 aus Figur 11 ausgeführt.

Figur 11 zeigt eine Draufsicht auf die Rückseite einer weiteren Ausführungsform eines erfindungsgemäßen Rahmens 100. Figur 12 zeigt eine Schnittansicht des Rahmens 100 aus Fig. 11 entlang XI.

Der Rahmen 100 aus Figur 11 ist insbesondere zur Verbindung mit einer Luke 10, vorzugsweise einer Luke 10 gemäß Figuren 6-10b ausgeführt. Der Rahmen weist eine Rahmenöffnung 101 auf.

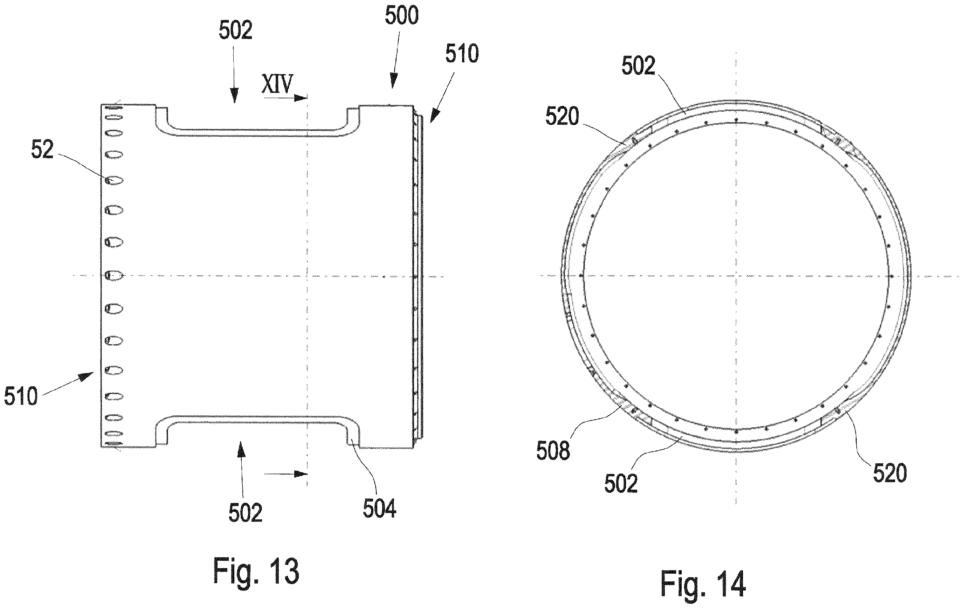

Der Rahmen 100 nimmt vorzugsweise die Luke 10 auf. Der umlaufende Bund 126 des Rahmens 100 wird insbesondere in eine Raketensegmentöffnung 502, vorzugsweise die Raketensegmentöffnung 502 des Raketensegments 500 aus Figur 13 eingesetzt. Die Verbindung zwischen Rahmen 100 und Raketensegments 500 erfolgt über eine Verbindungsfläche 170 des Rahmens 100, wobei insbesondere eine Schraubverbindung und/oder Nietverbindung zur Befestigung vorliegt.

Der Rahmen 100 weist eine der Verbindungsfläche 170 gegenüberliegende Außenfläche 124 auf. Die Außenfläche 124 ist vorzugsweise eben.

Zwischen der Außenfläche 124 und der Verbindungsfläche 170 ist eine Radialfläche 116 angeordnet. Die Radialfläche 116 ist vorzugsweise senkrecht zur Außenfläche 124 ausgeführt. Die Radialfläche 116 ist vorzugsweise elektropoliert.

Dargestellt weist der Rahmen 100 mehrere außenliegende Bohrungen 120, ausgehend von der Außenfläche 124, auf. Durch eine bevorzugte ebene bzw. planare Ausführung der Außenfläche 124 kann vorteilhaft umgesetzt werden, dass in die Bohrungen 120 eingesetzte Schrauben (nicht dargestellt) mit den Schraubenköpfen ebenen Kontakt zur Außenfläche 124 haben.

Die Radialfläche 116 weist, insbesondere planen Kontaktflächen zur Verbindung mit der Luke 10, vorzugsweise einer Radialfläche 16 der Luke 10, auf. Die Radialfläche 116 und/oder die Kontaktflächen der Radialfläche 116 sind vorzugsweise als Spielpassung ausgelegt. Das hat insbesondere den Hintergrund, dass bei einer elastischen Verformung des Rumpfsegments 500 die Kräfte direkt in den Bereich des Rahmens 100 mit einem höheren Flächenträgheitsmoment abgeleitet werden, anstatt über die Schraubverbindung mit dem Rumpfsegment 500. Zwischen Rahmen 100 und Rumpfsegment 500 wird vorzugsweise eine, vorzugsweise Silikon aufweisende, Dichtung (nicht dargestellt) angeordnet. Die Dichtung weist insbesondere eine Dichtmasse auf, besteht vorzugsweise daraus. Insbesondere wird die Dichtung an einer Dichtfläche 128 der Verbindungsfläche 170 des Rahmens 100, die insbesondere einer äußeren Stoßfläche entspricht, und/oder an einer Dichtfläche 128 des Rahmens Raketensegment 500, die insbesondere einer äußeren Stoßfläche entspricht, angeordnet. Vorzugsweise ist im inneren Dichtflächenbereich 130 und/oder im äußeren Dichtflächenbereich eine, vorzugsweise verstärkende, Silikonschicht, vorzugsweise eine Silikonnaht angeordnet. Insbesondere wird diese Silikonschicht nach Befestigung des Rahmens 100 an einem Rahmensegment 500, insbesondere nach Anziehen der Schrauben angeordnet. Diese Silikonschicht verhindert insbesondere ein kriechendes Austreten der Dichtmasse. Die Rahmenöffnung 101 entspricht vorzugsweise den Maßen der Luke 10. Vorzugsweise ist die Rahmenöffnung 101 ein, insbesondere gefräster, Durchbruch.

Der Rahmen 100 weist mehrere Riegelöffnungen 118c-118e zur Aufnahme von Riegeln 18c, 18e einer Luke 10, insbesondere der Luke gemäß Figuren 6-10b, auf. Bei den Riegelöffnungen 118c-118e handelt es sich vorzugsweise um Taschen und/oder Nuten. Die Riegelöffnungen 118c des Rahmens 100 aus Figur 11 sind insbesondere zur Aufnahme der Riegel 18c aus Figur 6 ausgeführt. Die Riegelöffnungen 118d des Rahmens 100 aus Figur 11 sind insbesondere zur Aufnahme der Riegel 18d aus Figur 6 ausgeführt. Die Riegelöffnungen 118e des Rahmens 100 aus Figur 11 sind insbesondere zur Aufnahme der Riegel 18e aus Figur 6 ausgeführt.

Der Rahmen 100 weist vorzugsweise mehrere Kavitäten 134, 136, insbesondere zur Reduzierung der Masse auf. Bei den Kavitäten 134, 136 kann es sich um Öffnungen handeln.

Optional weist der Rahmen 100 Bohrungen 122 zur mittelbaren oder unmittelbaren Verbindung mit einer, mindestens ein Scharnier aufweisenden, Scharniervorrichtung zur scharniergeführten Verbindung mit einer Luke 10 auf.

Figur 13 zeigt eine Seitenansicht eines Raketensegments 500. Bei dem Raketensegment handelt es sich insbesondere um ein Rumpfsegment. Figur 14 zeigt eine Schnittansicht des Raketensegments aus Fig. 13 entlang XIV. Das Raketensegment 500 weist zwei, insbesondere gegenüberliegende, Raketensegmentöffnungen 502 auf. Die Raketensegmentöffnungen 502 sind zum Verschließen mit Luken 10, gemäß Figuren 6-10b, aufgeführt, wobei die Verbindung vorzugsweise über mit dem Raketensegment 500 verbunden Rahmen 100, insbesondere gemäß Figur 11, erfolgt.

Das Raketensegment 500 ist bspw. 400 mm hoch. Bevorzugt schließt das Raketensegment 500 oben und/oder unten mit Radaxringen 510 ab, an denen weiter folgende Segmente angeknüpft werden können. Die Verbindung mit weiteren Segmenten erfolgt insbesondere über, vorzugsweise als Flanschbohrungen ausgeführte, Bohrungen 512. Bevorzugt ist es, dass das Raketensegment 500 eine radial verändernde variable Wandstärke 508 aufweist. Dies wird insbesondere durch einen Scheibenfräser realisiert. Klassische Segmentronden gewinnen ihre Innengeometrien generell durch Drehen.

Die Raketensegmentöffnungen 502 sind insbesondere durch die wandstärkeren Bereiche 508 ausgeführt. Vorzugsweise handelt es sich bei den Raketensegmentöffnungen 502 um, vorzugsweise ausgefräste, Durchbrüche. Da durch die Raketensegmentöffnungen 502 generell die Festigkeit gemindert wird, ist eine Erhöhung der Wandstärke von Vorteil. Bevorzugt entspricht dabei der Innenradius der Wandstärken dickeren Winkelsektionen dem des oberen Radaxrings. Dadurch wird kein Bauraumverlust realisiert. Ein vorzugsweises Verbinden, insbesondere stoffschlüssiges Verbinden, des oberen und/oder unteren Radaxrings erhöht die Festigkeit gegenüber Biegespannungen besonders. In die dickere Wandung sind vorzugsweise Gewindesackbohrungen 520 gebohrt, um den Rahmen 100 aufzunehmen.

Das Raketensegment 500 weist eine Vertiefung 504, insbesondere Tasche, zur Aufnahme der Blende 14 der Luke 10, vorzugsweise gem. Fig. 6, auf. Die Kontur, vorzugsweise die Innenkontor, der Vertiefung 504 entspricht insbesondere der Kontur, vorzugsweise die Außenkontur, der Luke 10.

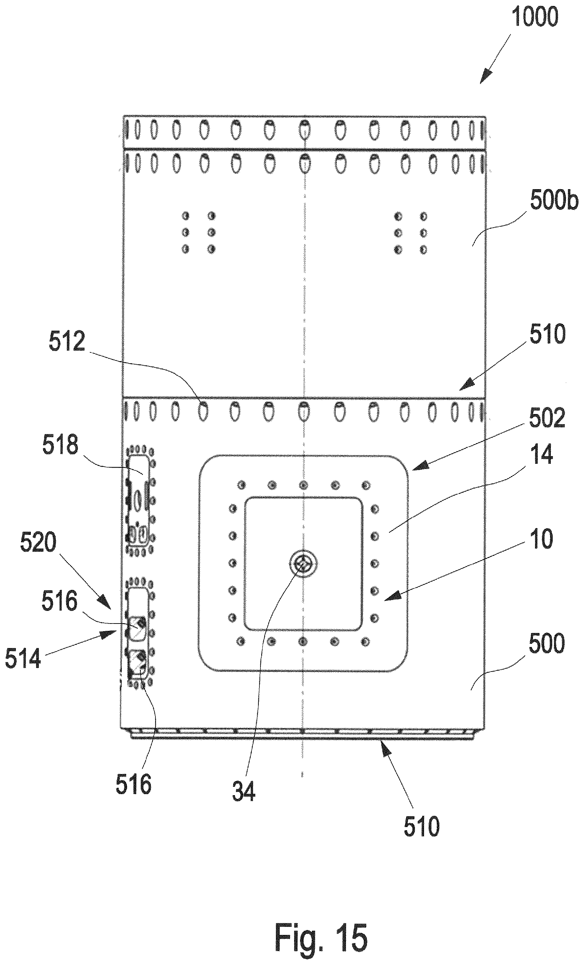

Figur 15 zeigt eine Seitenansicht einer Rakete 1000 mit einer weiteren Ausführungsform eines erfindungsgemäßen Raketensegments 500 mit einer erfindungsgemäßen Luke 10.

Das Raketensegment 500 ist, insbesondere mittel Radaxring 510 mit einem weiteren Raketensegment 500b verbunden.

Das Raketensegment 500 entspricht insbesondere dem Raketensegment 500 aus Figur 13. In die Raketensegmentöffnung 502 ist eine Luke 10, insbesondere eine Luke 10 gemäß Figuren 6-10b eingesetzt, wobei es bevorzugt ist, dass zur Verbindung der Luke 10 mit dem Raketensegment 500 ein Rahmen 100, vorzugsweise ein Rahmen gemäß Figur 11, genutzt wird.

Das Raketensegment 500 weist dargestellt ein Drucksystem 520 auf. Das Drucksystem 520 weist hierbei ein Druck-Interface-Panel 514 mit zwei, vorzugsweise selbstsperrenden, Kupplung 516 auf. Anstelle der dargestellten Ausführung ist insbesondere auch eine Ausführung mit nur einer Kupplung 516 möglich. Über die Kupplung 516 kann vorzugsweise eine expandierbare Radialdichtung 30 der Luke 10 mit Fluid, bspw. Stickstoff, bedruckt werden, um derart eine Abdichtung zwischen Luke sowie Raketensegment 500 und/oder Rahmen 100 umzusetzen. Das Drucksystem 520 kann insbesondere ferner (nicht dargestellt) aufweisen: einen Druckspeicher, wie bspw. eine Druckkammer, und/oder ein Umbilical-System, und/oder ein Ventil, vorzugsweise Magnetventil und/oder einen Drucksensor. Das Umbilical-System weist vorzugsweise mindestens einen Schlauch und/oder mindestens einen Anschluss auf.

Insbesondere optional weist das Raketensegment 500 ein weiteres Interface-Panel 518, vorzugsweise zur Daten- und/oder Stromversorgung des Raketensegments 500 von außen auf.

Vorliegend, insbesondere in der Ausführung der Luke 10 der Figuren 6-10b und/oder der Ausführung des Rahmens 100 der Figure 11-12, wird grundsätzlich zwischen primären und sekundären Kräften unterschieden. Unter den primären Kräften werden die Kräfte definiert, die die Luke 10 gegenüber ihrer Einsatzumwelt ausgesetzt ist. Es lassen sich aufzählen:
- Die maximal zu erwartende statische Trägheitskraft, die aus der Beschleunigung der Rakete hervorgeht,
- Die dynamischen Kräfte, d. h. Schwingungen durch Motorabbrand- werden rechnerisch über Äquivalenzbeschleunigung abgedeckt,
- Druckkräfte, durch Differenz der statischen Drücke.

Die sekundären Kräfte sind Kräfte, die für die Zustandswechsel benötigt werden:
- Betätigungskräfte (und Moment) zum Verschließen/Öffnen,
- Federkräfte zum Aufbau/Aufrechterhaltung der Energiesenke und Rückstellung des Kolbens.

Die beweglichen mechanischen Bauteile sind vorzugsweise radialsymmetrisch um die Kupplung 54 angeordnet, sodass sich die Trägheitskräfte gegenseitig aufheben. Dabei kann die Luke 10 in alle axialen Richtungen beschleunigt werden. Über die Federn wird die Hebelmechanik gespannt und an die Anschlagkanten angedrückt. Die Anschlagkanten der Lagerpunkte des Grundkörpers 12 sind vorzugsweise aus einem Bauteil gefräst. Die Massenträgheitskraft der gesamten Luke wird über die Riegel 18 in den Rahmen 100 übertragen. Der Grundkörper 12 hat zum Führen der Gleitstücke 57 vorzugsweise T-Nuten 28. Die Druckkraft durch die statische Druckdifferenz wird somit über einen Formschluss in Belastungsrichtung von den Riegeln 18 über die Gleitstücke 57 direkt in den Grundkörper 12 geleitet. Als redundanter Sicherheitsmechanismus dient die bereits beschriebene Arretiermechanik 24. Der Dimensionierung der Rückstellfeder gehen insbesondere folgende Anforderungen voraus:
- Der Drehkolben 40 muss händisch gedrückt werden können.
- Der Anpressdruck muss groß genug sein, um die Dichtung ausreichend zu pressen,
- Die Vorspannkraft der Feder muss größer sein als das Produkt der Äquivalenzbeschleunigung durch dynamische Kräfte und der Masse des Drehkolbens 40, um den Kolben auf Position zu halten.

Mit Einrasten der Zähne 45 des Kolbens 40 in die mit dem Grundkörper 12 verbundenen Arretierscheibe 44 werden die Haltekräfte vorzugsweise durch einen Bolzen durch den Drehkolben 40 und der Kupplung 54 übertragen. Das vorzugsweise Aufschrauben einer Kontermutter dient einer weiteren Redundanz. Mit aufgeschraubter Kontermutter lässt sich der Drehkolben 40 nicht mehr eindrücken, damit auch nicht mehr drehen. Somit greifen die Zähne 45, die Kupplung 54 kann nicht mehr drehen, insbesondere aufgrund des Bolzens und damit ist die Verschlussmechanik nicht mehr bedienbar.

Vorzugsweise ist eine Radialdichtung 30 in der Nut 38, insbesondere aus Figur 7, angeordnet. Die Radialdichtung 30 weist vorzugsweise Silikon auf, besteht insbesondere daraus. Vorzugsweise weist die Radialdichtung 30 einen Schlauch auf, besteht insbesondere daraus. Es ist bevorzugt, dass die Radialdichtung 30 über einen Memory-Effekt verfügt, sodass die Radialdichtung 30 ohne Druckbeaufschlagung so in die Nut zurückfällt, dass sie bündig abschließt. Dies ist vorteilhaft, damit beim Einsetzten der Luke 10 die Radialdichtung 30 nicht durch Abscheren beschädigt wird. Vorzugsweise ist ein (nicht dargestelltes) Ventil an der Radialdichtung 30 vorgesehen, dass durch eine Bohrung im Nutgrund der Nut 38 in das Innere der Luke 10 geführt ist. Mit dem Ventil ist vorzugsweise ein flexibler Pneumatikschlauch verbunden, insbesondere damit verschraubt. Der Schlauch ist vorzugsweise über, insbesondere selbstsperrende, Schnellkupplungen an ein Interface-Panel 514 im Inneren des Rumpfsegments 500 gesteckt, welches vorzugsweise mit mindestens einem Druckspeicher verbunden ist. Der Druckspeicher ist vorzugsweise über das extern zugängliche Umbilical über eine selbstsperrende Kupplung 516 (vgl. Fig. 15) mit Stickstoff zu beaufschlagen. Vorzugsweise trennt ein normal offenes Magnetventil bei anliegender Versorgungsspannung die pneumatische Verbindung zwischen Druckspeicher und Umbilical. Damit soll verhindert werden, dass bei einem Ausfall der Anschlusskupplungen durch thermische Überbelastung während des Fluges der Druck in der Radialdichtung 30 abfällt. Die Druckspeicher kompensieren höhere Druckschwankungen aufgrund von Temperaturänderungen während des Fluges. Da die Radialdichtung 30 ein nur geringes Gasvolumen aufnimmt, könnten auf selbst kleine Temperaturänderungen ohne Druckspeicher hohe Druckveränderungen folgen, die eine Zerstörung der Radialdichtung 30 und damit ein Totalausfall verursachen könnten. Vorzugsweise überwacht und/oder dokumentiert ein Drucksensor dabei den anliegenden Dichtungsdruck während der gesamten Einschaltzeit. Mit dem Bedrucken der Radialdichtung 30 presst sich diese an die vorzugsweise elektropolierte Radialfläche 116 des Rahmens 100 und wirkt wie eine klassische Radialdichtung. Dabei ist es bevorzugt, dass das Spaltmaß nach 0,5 mm nicht überschreitet. Dies wird vorzugsweise durch die Selbstzentrierung beim Verschließen mit Fasen 69 der Riegel 18 und der Riegelöffnungen 118 des Rahmens 100 sichergestellt.

Das erfindungsgemäße Verfahren kann insbesondere mit einem oder mehreren Merkmalen der oben beschriebenen Ausführungsformen ausgeführt werden.

## Patentansprüche

1. Luke (10) für ein Raketensegment (500), insbesondere einer Höhenforschungsrakete (1000), mit
einem Grundkörper (12),
einer mit dem Grundkörper (12) verbundenen Blende (14) zum Verschlie-ßen einer Raketensegmentöffnung (502), und
einer Radialdichtung (30) zum druckdichten Abdichten zwischen Grundkörper (12) und Raketensegmentöffnung (502).

2. Luke (10) nach Anspruch 1, **dadurch gekennzeichnet, dass** der Grundkörper (12) eine, insbesondere umlaufende, Radialfläche (16) aufweist, wobei bevorzugt die Radialdichtung (30) mit der Radialfläche (16), insbesondere umlaufend, verbunden ist.

3. Luke (10) nach einem der Ansprüche 1-2, **dadurch gekennzeichnet, dass** der Grundkörper (12)
eine erste, mit der Blende (14) verbundene, Fläche (70) aufweist, und eine, der ersten Fläche (70) gegenüberliegende, zweite Fläche (20) aufweist,
wobei die zweite Fläche (20) im Wesentlichen eben ist.

4. Luke (10) nach einem der Ansprüche 1-3, **gekennzeichnet durch** eine Verschlussvorrichtung (23), insbesondere eine Verriegelung, zur lösbaren Verbindung der Luke (10) mit dem Raketensegment (500).

5. Luke (10) nach Anspruch 4, **dadurch gekennzeichnet, dass** die Verschlussvorrichtung (23) mehrere, insbesondere mindestens drei, Riegel (18) zur formschlüssigen Verbindung mit dem Raketensegment (500) aufweist.

6. Luke (10) nach Anspruch 5, **gekennzeichnet durch** eine Arretiermechanik (24) zum Bewegen mehrerer, insbesondere aller, Riegel (18) von einer Öffnungsposition in eine Verschlussposition, wobei die Arretiermechanik (24) bevorzugt mindestens eine, insbesondere kraftauslösende, Betätigungsverriegelung zum Sperren der Arretiermechanik (24) in einer Startposition und/oder in einer Endposition aufweist.

7. Rahmen (100) für eine Raketensegmentöffnung (502), insbesondere einer Höhenforschungsrakete, zum Verbinden mit einer Luke (10), vorzugsweise
einer Luke (10) nach einem der Ansprüche 1-6, mit
einer Radialdichtung (130) zum druckdichten Abdichten zwischen dem Rahmen (100) und der Luke (10).

8. Rahmen (100) nach Anspruch 7, **gekennzeichnet durch** eine, insbesondere umlaufende, Radialfläche (116), wobei bevorzugt die Radialdichtung (130) mit der Radialfläche (116), insbesondere umlaufend, verbunden ist.

9. Rahmen (100) nach einem der Ansprüche 7-8, **gekennzeichnet durch** eine Verbindungsfläche (170) zur Verbindung des Rahmens (100) mit dem Raketensegment (500), und
eine, der Verbindungsfläche (170) gegenüberliegende, Außenfläche (124), wobei die Außenfläche (124) im Wesentlichen eben ist.

10. Rahmen (100) nach einem der Ansprüche 7-9, **gekennzeichnet durch** mehrere, insbesondere mindestens drei, Riegelöffnungen (118) zur Aufnahme von Riegeln der Luke (10).

11. Luke (10) nach einem der Ansprüche 1-6 oder Rahmen (100) nach einem der Ansprüche 7-10, **dadurch gekennzeichnet, dass** die Radialdichtung (130) expandierbar, insbesondere aufblasbar, ist.

12. Raketensegment (500), insbesondere Raketenrumpfsegment, mit einer Öffnung (502),
einer Luke (10) zum, insbesondere druckdichten, Verschließen der Öffnung (502), und
einem Rahmen (100) zur Verbindung der Luke (10) mit dem Raketensegment (500),
**dadurch gekennzeichnet, dass**
die Luke (10) nach einem der Ansprüche 1-6 ausgebildet ist, und/oder der Rahmen (100) nach einem der Ansprüche 7-10 ausgebildet ist.

13. Verfahren zur Benutzung eines Raketensegments (500) mit einer Raketensegmentöffnung (502) unter Verwendung entweder:
- einer Luke (10) nach einem der Ansprüche 1-6 und einem Rahmen (100) für eine Raketensegmentöffnung (502), oder
- einer Luke (10) und einem Rahmen (100) nach einem der Ansprüche 9-13, oder
- einer Luke (10) nach einem der Ansprüche 1-6 und einem Rahmen (100) nach einem der Ansprüche 7-10, oder
- einem Raketensegment (500) nach Anspruch 12;
wobei das Verfahren den Schritt aufweist:
- Verschließen, insbesondere druckdichtes Verschließen, der Raketensegmentöffnung (502) mit der Luke (10).

14. Verfahren nach Anspruch 13, **dadurch gekennzeichnet, dass** beim Verschließen ein Dichtungsdruck von mindestens 3 bar, bevorzugt mindestens 5 bar, besonders bevorzugt mindestens 7 bar herrscht, wobei der Dichtungsdruck insbesondere im Inneren der Radialdichtung (30; 130) herrscht.

15. Verfahren nach Anspruch 13 oder 14, **dadurch gekennzeichnet, dass** während eines Startvorgangs einer Rakete (1000), die das Raketensegment (500) aufweist, insbesondere während des Countdowns, und vor dem Verschließen der Raketensegmentöffnung (502) mindestens einer der folgenden Schritte erfolgt:
- Eingeben mindestens einer, vorzugsweise organischen, Probe, und/oder
- Einrichten einer, vorzugsweise optischen, Untersuchungsvorrichtung.
